# EUROPEAN PATENT SPECIFICATION

(11) **EP 2 415 349 B1**
(45) Date of publication and mention of the grant of the patent: **08.05.2013**
(21) Application number: 10761392.9
(22) Date of filing: 30.03.2010
(51) Int. Cl.: A23C 9/142, A23C 19/06, A23C 21/00, A23C 9/146, A23C 19/05, A23C 19/045

(54) **METHOD FOR PRODUCING DESALTED MILK, AND DESALTED MILK**
VERFAHREN ZUR HERSTELLUNG ENTSALZTER MILCH UND ENTSALZTE MILCH
PROCEDE DE PRODUCTION DE LAIT DESSALE ET LAIT DESSALE

(30) Priority: 30.03.2009 JP 2009081424
(43) Date of publication of application: 08.02.2012
(73) Proprietor: Morinaga Milk Industry Co., Ltd., Minato-ku Tokyo 108-8384 (JP)
(72) Inventor: SEKI, Nobuo, Zama-shi Kanagawa 252-8583 (JP); KINOSHITA, Kie, Zama-shi Kanagawa 252-8583 (JP); SAITO, Hitoshi, Zama-shi Kanagawa 252-8583 (JP); OHNISHI, Masatoshi, Higashiyamato-shi Tokyo 207-0021 (JP); TAMURA, Yoshitaka, Tokyo 108-8384 (JP); KOISHIHARA, Hiroshi, Zama-shi Kanagawa 252-8583 (JP); ODAKA, Mirei, Zama-shi Kanagawa 252-8583 (JP)
(74) Representative: Vossius & Partner
(86) International application number: PCT/JP2010/002327
(87) International publication number: WO 2010/116686

(56) References cited:
- EP-A1- 1 929 876
- WO-A2-2004/022787
- FR-A1- 2 848 877
- JP-A- 8 266 221
- JP-A- 2001 275 562
- JP-A- 2004 180 580
- JP-A- 2008 167 697

## Description

### TECHNICAL FIELD

The present invention relates to a process for producing a demineralized milk, a demineralized milk produced using such a process, a process for producing a cheese and whey, and a cheese and whey produced using such a process.
Priority is claimed on Japanese Patent Application No. 2009-081424, filed March 30, 2009, the content of which is incorporated herein by reference.

### BACKGROUND ART

Milk such as cow's milk is rich in minerals such as calcium and high-quality protein, and is a highly nutritious food product. As a result, it is not only used for direct consumption, but is also widely used as a raw material for all manner of so-called dairy products such as yoghurt and cheese, as a flavor improver for bread and baked sweets, as a raw material for other beverages, and as a material for all manner of processed foodstuffs such as infant formula.

Milk contains magnesium as well as calcium. Calcium and magnesium are important nutrients, the intake levels of which are prescribed in many countries. In Japan, these intake levels are prescribed in "Dietary Reference Intakes for Japanese (2005)". Further, calcium and magnesium are specified as nutritional components that may be listed for food with nutrient function claims, and by satisfying certain requirements, foodstuffs may be listed as having calcium or magnesium functions.
In this manner, the nutritional importance of calcium and magnesium is widely recognized, and although foodstuffs that have been fortified with calcium and/or magnesium, and calcium and magnesium supplements are widely available, the results of the "2005 National Health and Nutrition Survey" show clearly that the intake rates do not satisfy the dietary reference intake levels.
Against this type of background, dairy products produced from milk are expected as high-quality sources of calcium and magnesium.

On the other hand, milk also contains other minerals such as sodium and potassium. There are cases where it is preferable to reduce the content of these minerals, and this has resulted in the proposal of a multitude of milk demineralization treatment methods.

Due to the types of circumstances described above, there are also cases where, in a demineralization treatment for removing minerals from milk, it is desirable to remove the monovalent minerals (sodium and potassium), without reducing the amounts of the nutritionally valuable divalent minerals (calcium and magnesium).
Conventionally, demineralization treatments have employed ion exchange processes, nanofiltration processes or electrodialysis processes. For example, Patent Document 1 discloses a process in which an ion exchange process using a cation exchange resin (a softening treatment) is used to exchange divalent mineral cations contained within a raw milk solution with monovalent mineral cations. Further, Patent Document 2 also discloses a process that uses a cation exchange resin.

However, as is also disclosed in Patent Document 1, performing a softening treatment using a cation exchange resin causes the nutritionally valuable divalent minerals to be substituted with monovalent minerals.
Furthermore, even in the technique disclosed in Patent Document 2, the cation exchange resin removes not only the monovalent minerals, but also the divalent minerals. Moreover, in this case, the removal of the divalent minerals proceeds preferentially.
On the other hand, Patent Documents 3 and 4 disclose a process that uses a nanofiltration membrane (NF membrane) for the demineralization treatment.

### CITATION LIST

### PATENT DOCUMENTS

[Patent Document 1]
   Japanese Unexamined Patent Application, First Publication No. 2001-275562
[Patent Document 2]
   Japanese Patent (Granted) Publication No. 2,623,342
[Patent Document 3]
   Japanese Unexamined Patent Application, First Publication No. Hei 08-266221
[Patent Document 4]
   Japanese Patent Application JP 2008-167697 A.

### DISCLOSURE OF INVENTION

### PROBLEMS TO BE SOLVED BY THE INVENTION

By employing the technique disclosed in the above Patent Document 3, sodium ions and potassium ions permeate through the nanofiltration membrane, whereas calcium ions and magnesium ions undergo substantially no permeation, and therefore the amount of monovalent minerals can be reduced selectively.
However, because the technique disclosed in Patent Document 3 is a demineralization treatment that is centered around the nanofiltration membrane, not only is the demineralization efficiency unsatisfactory, but the resulting demineralized milk can not be used to produce cheese or whey simply by performing a heat treatment.

The present invention has been developed in light of the above circumstances, and has an object of providing a process for producing a demineralized milk that enables excellent reduction in the amount of monovalent minerals while suppressing any reduction in the amount of divalent minerals, as well as providing a demineralized milk produced using the above process, a process for producing a cheese and whey from the demineralized milk, and a cheese and whey produced using the above process.

### MEANS TO SOLVE THE PROBLEMS

A process for producing a demineralized milk according to the present invention includes a demineralization treatment step of passing a raw milk solution through an anion exchange resin in chloride form, and subsequently removing monovalent minerals contained within the raw milk solution using a membrane separation process.
The membrane separation process is preferably a nanofiltration process.
The raw milk solution preferably contains a milk in which at least a portion of the fat has been removed from a whole milk. In such a case, the process may include a further step of mixing fat into the demineralized milk following completion of the above demineralization treatment step.
A demineralized milk of the present invention is produced using the production process described above.
A process for producing a cheese and whey according to the present invention includes a demineralization treatment step of passing a raw milk solution through an anion exchange resin in chloride form, and subsequently removing monovalent minerals contained within the raw milk solution using a membrane separation process, a heating step of heating the demineralized milk obtained in the demineralization treatment step to produce a curd, and a solid-liquid separation step of separating the curd from the liquid other than the curd.
A cheese of the present invention is produced using the production process described above.
A whey of the present invention is produced using the production process described above.
In other words, the present invention relates to the aspects described below.
(1) A process for producing a demineralized milk, including passing a raw milk through an anion exchange resin in chloride form to effect anion exchange, and removing monovalent minerals contained within the raw milk following anion exchange using a membrane separation process.
(2) The process according to (1), wherein the membrane separation process is a nanofiltration process.
(3) The process according to (1) or (2), wherein the raw milk is a milk in which at least a portion of the fat has been removed from a whole milk.
(4) The process according to (3), further including mixing fat into the demineralized milk.
(5) A demineralized milk produced using the process according to any one of (1) to (4), wherein the demineralized milk contains, per 100 g of solids, not less than 26 mmol of calcium, not less than 2 mmol of magnesium, not more than 4.5 mmol of sodium, not more than 10.5 mmol of potassium, and not more than 3 mmol of citric acid.
(6) A process for producing a cheese and whey, including passing a raw milk through an anion exchange resin in chloride form to effect anion exchange, removing monovalent minerals contained within the raw milk following anion exchange using a membrane separation process, thus preparing a demineralized milk, heating the demineralized milk to produce a curd in the demineralized milk, and performing a solid-liquid separation treatment to separate the curd from the liquid other than the curd.
(7) A process according to (6), wherein the membrane separation process is a nanofiltration process.
(8) A cheese produced by the process according to (6) or (7), wherein the cheese contains, per 100 g of solids, not less than 20 mmol of calcium, not less than 2 mmol of magnesium, not more than 5 mmol of sodium, and not more than 10.5 mmol of potassium.
(9) A whey produced by the process according to (6) or (7), wherein the whey contains, per 100 g of solids, not less than 1.5 mmol of calcium, not less than 1 mmol of magnesium, not more than 10 mmol of sodium, and not more than 20 mmol of potassium.

### EFFECT OF THE INVENTION

The present invention is able to provide a process for producing a demineralized milk that enables excellent reduction in the amount of monovalent minerals while suppressing any reduction in the amount of divalent minerals, as well as providing a demineralized milk produced using the above process, a process for producing a cheese and whey from the demineralized milk, and a cheese and whey produced using the above process.

### EMBODIMENTS FOR CARRYING OUT THE INVENTION

A more detailed description of the present invention is presented below.
Examples of the raw milk solution used in the present invention include partially-skimmed milk and skim milk. Using this type of raw milk solution in which a portion of the fat has been removed from a whole milk (milk from which no fat has been removed) is preferable, because during the demineralization treatment step described below, when the raw milk solution is passed through an anion exchange resin in chloride form and subsequently subjected to the removal of monovalent minerals contained within the raw milk solution using a membrane separation process, adhesion of fat to the anion exchange resin in chloride form or the filtration membrane can be better prevented, and fouling of the filtration membrane becomes less likely.
The above types of skimmed milk may be used as the raw milk solution without further modification, or may also be subjected to adjustment of the solid concentration by either dilution or concentration of the raw milk solution. Milk from cows, goats or sheep or the like may be used as the raw milk.
Further, the raw milk solution may be a product prepared by reconstituting partially-skimmed milk powder or a skim milk powder or the like, which has been powdered using a spray drying process or freeze drying process.
Furthermore, milk that has undergone sterilization by normal processes may also be used.

The present invention includes, as a demineralization treatment step, a step of passing a raw milk solution through an anion exchange resin in chloride form, and subsequently removing monovalent minerals contained within the raw milk solution using a membrane separation process.
The anion exchange resin in chloride form used in this step may employ either a commercially available anion exchange resin in chloride form, or an anion exchange resin that has been converted to a chloride form by treating a non-chloride form strongly basic or weakly basic anion exchange resin with a saline solution, potassium chloride solution or hydrochloric acid or the like.

In the present invention, by passing the raw milk solution through the anion exchange resin in chloride form, anions within the raw milk solution such as citric acid are exchanged for chloride ions.

There are no particular limitations on the conditions during passage of the raw milk solution through the anion exchange resin in chloride form, and these conditions may be set appropriately with due consideration of factors such as the ion exchange efficiency and the suppression of microbial proliferation.
Examples of preferred conditions include a space velocity (SV) of 0.5 to 12, a solid concentration within the raw milk solution of 4 to 40% by mass, and a temperature for the raw milk solution within a range from 2 to 50°C. In terms of the SV value, a value that yields a targeted chloride ion concentration within the raw milk solution following passage through the anion exchange resin in chloride form is preferred, whereas in terms of the solid concentration and temperature conditions, these values may be adjusted appropriately within the respective ranges that enable the chloride ion concentration within the raw milk solution following passage through the anion exchange resin in chloride form to be increased to the target value without causing lactose precipitation. Generally, the ion exchange efficiency increases when the SV value is not too high, and the solid concentration is comparatively low. Further, the ion exchange efficiency also increases as the solid fraction flow volume per unit exchange capacity of the anion exchange resin in chloride form is reduced. In order to suppress microbial proliferation, the temperature of the raw milk solution is preferably not higher than 10°C.

The target value for the chloride ion concentration (molar concentration) within the raw milk solution following passage through the anion exchange resin in chloride form is preferably set to the same value as the concentration (molar concentration) of monovalent mineral cations contained within the raw milk solution, but may be adjusted appropriately in accordance with the targeted demineralization rate or the composition desired for the final demineralized milk.

In this manner, in the demineralization treatment step within the present invention, the raw milk solution is passed through an anion exchange resin in chloride form, and is subsequently subjected to the removal of monovalent minerals contained within the raw milk solution using a membrane separation process.
There are no particular limitations on the membrane separation process employed, provided the blocking rate for divalent mineral cations contained within the raw milk solution is high, and the permeation rate for monovalent mineral cations is high. For example, a nanofiltration process is preferred.
Here, a "nanofiltration process" means a process that includes a step in which, following passage through the anion exchange resin in chloride form, the raw milk solution is supplied to a nanofiltration membrane, and separated into a permeate that permeates through the nanofiltration membrane and a concentrate that does not permeate the membrane. Monovalent mineral cations permeate through the membrane and are contained within the permeate. In contrast, divalent mineral cations undergo substantially no permeation, and are retained within the concentrate. Further, the nanofiltration process may also include a diafiltration step in which water is added to the concentrate obtained in the manner described above, and the resulting mixture is again filtered through the nanofiltration membrane.

Nanofiltration (NF) is a membrane separation process positioned in the region between ultrafiltration (UF) and reverse osmosis (RO), and targets the separation of moieties having molecular mass values from several dozen to a thousand daltons, which is equivalent to a molecular size in the nanometer region. Among minerals, sugars, amino acids and vitamins and the like, those particles having a small molecular mass and a low charge permeate through the membrane. Although specific examples ofNF membranes include the DL, DK and HL series of membranes manufactured by GE Water Technologies Inc., the SR-3 series of membranes manufactured by Koch Membrane Systems, Inc., the DOW-NF series of membranes manufactured by Dow Chemical Company, and the NTR series of membranes manufactured by Nitto Denko Corporation, this is not an exhaustive list, and any suitable membrane may be selected according to need.

Examples of other membrane separation processes that may be employed favorably include conventional processes such as electrodialysis processes and dialysis processes. A plurality of processes may also be used in combination. However, as mentioned above, nanofiltration is preferred, both in terms of being able to perform demineralization and concentration concurrently, and in terms of being able to achieve a higher level of demineralization by combining the nanofiltration step with a diafiltration step as required.

By employing this type of demineralization treatment step, in which the raw milk solution is passed through an anion exchange resin in chloride form and subsequently subjected to the removal of monovalent minerals contained within the raw milk solution using a membrane separation process, the monovalent minerals can be reduced further than the case where the raw milk solution is simply separated using a membrane separation process without first passing the raw milk solution through an anion exchange resin in chloride form.

Accordingly, in the present invention, during the demineralization treatment step, prior to supply of the raw milk solution to a membrane separation process such as nanofiltration, the raw milk solution is first passed through an anion exchange resin in chloride form, thereby increasing the chloride ion concentration of the raw milk solution, and is then supplied to the membrane separation process.

Further, as the process used for increasing the chloride ion concentration of the raw milk solution, other processes such as a process in which hydrochloric acid is added to the raw milk solution are also possible. However, if hydrochloric acid is added to the raw milk solution, then the pH of the raw milk solution decreases, and there is a concern that the pH may fall below the isoelectric point (pH 4.6) of the casein and the like contained within the raw milk solution. If the pH of the raw milk solution nears 4.6, then the casein undergoes aggregation, and for this reason the addition of hydrochloric acid is undesirable.
In contrast, passing the raw milk solution through an anion exchange resin in chloride form is preferred, as it does not cause the above type of decrease in the pH.

Conventionally, in dairy products and the like, chloride ions have been targeted for removal.
For example, page 245 of "Milk and Dairy Products" (Yokendo Co., Ltd.) discloses the removal of chloride ions by anion exchange resin during the demineralization of whey. Further, page 353 of "Production of Dairy Products II" (Asakura Publishing Co., Ltd.) also refers to chlorine as an ion that is removed by ion exchange. Accordingly, conventionally, when an anion exchange resin has been used, rather than using an anion exchange resin in chloride form, an anion exchange resin in hydroxide form has typically been used. This use of an anion exchange resin in hydroxide form is supported by the disclosure on page 353 of "Production of Dairy Products II" (Asakura Publishing Co., Ltd.), which states that sodium hydroxide is used as a regeneration agent for anion exchange resins, and by the fact that the anion exchange resins exemplified in paragraph 0024 of the above-mentioned Patent Document 1 are all in hydroxide form.
Furthermore, generally when the term "demineralization" is used, it is assumed that chloride ions are removed, for example as disclosed on page 644 of "Chemical Encyclopedia 5" (Kyoritsu Shuppan Co., Ltd.).

In the present invention, contrary to this type of conventionally accepted knowledge, an anion exchange resin in chloride form is used, and the chloride ion concentration within the raw milk solution is not reduced, but is actually initially increased. By subsequently subjecting the raw milk solution to a membrane separation process, a demineralized milk having a dramatically reduced concentration of monovalent minerals can be obtained.
This use of a membrane separation process following passage of the raw milk solution through an anion exchange resin in chloride form represents a novel approach.

The demineralized milk of the present invention preferably contains, per 100 g of solids, not less than 26 mmol, more preferably not less than 28 mmol, and still more preferably not less than 30 mmol of calcium, not less than 2 mmol, more preferably not less than 3 mmol, and still more preferably not less than 4 mmol of magnesium, not more than 4.5 mmol, more preferably not more than 3 mmol, and still more preferably not more than 1.5 mmol of sodium, not more than 10.5 mmol, more preferably not more than 7 mmol, and still more preferably not more than 3.5 mmol of potassium, and not more than 3 mmol, more preferably not more than 1.5 mmol, and still more preferably not more than 1 mmol of citric acid.
Furthermore, the amount of calcium within the demineralized milk is typically not more than 32 mmol per 100 g of solids, and the amount of magnesium is typically not more than 5 mmol per 100 g of solids.

The production process of the present invention must include at least the demineralization treatment step of passing a raw milk solution through an anion exchange resin in chloride form, and subsequently removing monovalent minerals contained within the raw milk solution using a membrane separation process. For example, this demineralization treatment step may be repeated a plurality of times, and if required, an additional membrane separation process such as a nanofiltration process, electrodialysis process or dialysis process may be performed as a stand-alone process either before or after the above type of demineralization step.
Further, in those cases where, as the membrane separation process, a circulatory (batch treatment) nanofiltration process is employed in which the raw milk solution is supplied to the nanofiltration membrane for separation into a permeate and a concentrate, and the resulting concentrate is then returned to the raw solution tank and recirculated through the system, the treatment of passing the raw milk solution through the anion exchange resin in chloride form may be performed either prior to returning the concentrate to the raw solution tank, or following the return to the raw solution tank. Moreover, a double-loop nanofiltration process may also be used, in which the raw milk solution is extracted from the raw solution tank and supplied to the nanofiltration membrane, with the resulting concentrate then being returned to the raw solution tank in one operation, while in a separate operation, the raw milk solution is extracted from the raw solution tank and passed through the anion exchange resin in chloride form, with the resulting liquid then being returned to the raw solution tank.

Furthermore, the demineralized milk of the present invention may be used in the form of normal liquid milk as a foodstuff raw material or the like, or may be powdered if required. There are no particular limitations on the powdering process employed, and examples include spray drying processes and freeze drying processes. However, because the demineralized milk produces curd upon heating, if a powdering process such as spray drying that includes heating is employed, then the process is preferably performed under conditions that do not result in the production of curd. If a milk that has a high heat history due to the sterilization conditions or the like is used as the raw milk, then the production of curd becomes less likely. Further, as described below, as the concentration of the solution being heated is reduced, the production of curd becomes less likely.

The demineralized milk of the present invention described above tastes less salty, imparts a stronger milky sensation, and has a more favorable flavor than conventional dairy products, and is therefore has excellent utility value as a foodstuff material.
Specifically, the demineralized milk can be used as a raw material for all manner of foodstuffs, including salt-reduced beverages (such as milk coffee and milk tea), dairy products (such as processed milk, milk-based beverages, yoghurt, milk powder and infant formula), and western-style confectionery (such as milk pudding, milk jelly and cakes), as well as nutritional products, liquid foods, bread and sweets. Further, gel-like dairy products such as yoghurt and western-style confectionery such as milk puddings and milk jelly prepared using the demineralized milk of the present invention are able to produce a more elastic texture than conventional products. It is thought that this phenomenon is due to the fact that the demineralized milk of the present invention tends to form a gel upon heating.
It is believed that this ability to produce products with reduced saltiness and a powerful milk sensation offers considerable advantages in producing desirable foodstuffs.

Furthermore, because the demineralized milk of the present invention has a low sodium content, it can also be used as a raw material for low-sodium foodstuffs. Low-sodium foodstuffs are particularly useful for patients with kidney disease or high blood pressure.

Further, by using a milk in which at least a portion of the fat has been removed from a whole milk as the raw milk solution, producing a demineralized milk from this raw milk solution, and then mixing separated cream as fat into the thus obtained demineralized milk, a milk can be produced that has lower levels of sodium and potassium than conventional milks. Conventional dairy products and derived products can then be produced using this milk as a starting material.
By adding one or more substances selected from the group consisting of milk fat such as separated cream and butter, plant-based fats and animal-based fats to the demineralized milk as fat, high-fat food products and foodstuff raw materials can be produced which contain milk components but have lower levels of sodium and potassium than conventional products. Milk produced in this manner, and dairy products, derived products, high-fat food products and foodstuff raw materials prepared using the milk as a starting raw material have lower sodium and potassium levels than conventional products, and are so-called reduced ash products.

Furthermore, by supplying the raw milk solution to the demineralization treatment step in the manner described above to obtain a demineralized milk of the present invention, and subsequently heating the demineralized milk in a heat treatment step, a curd is produced. Following the heat treatment step, by subsequently conducting a solid-liquid separation step of separating the curd from the liquid other than the curd, a cheese and whey of the present invention can be produced.
Specifically, as the solid concentration is lowered, as the degree of ion exchange during the ion exchange step is reduced, and as the heat history of the raw milk is increased, heating at a higher temperature for a longer period of time is required to produce the curd, and therefore the solid concentration, the heating conditions and the properties of the raw milk must be selected in accordance with the properties required of the curd. If the solid concentration of the demineralized milk is within a range from 10 to 25%, then as the heating conditions, heating at a temperature of 70 to 90°C for a period of 1 to 5 minutes is preferred. Further, as the raw milk, an unsterilized milk or a milk that has been sterilized under mild conditions known as "low heat" is preferred.
The solid material obtained by squeezing the curd is cheese, whereas the residual liquid following removal of the cheese from the heated demineralized milk is whey.
In other words, in the present invention, the curd obtained by heating the demineralized milk is referred to as cheese, and the remaining liquid is referred to as whey.
There are no particular limitations on the actual solid-liquid separation process used, and one specific example involves filtration using a filter of approximately 200-mesh.

By using the process described above, a cheese can be obtained without the addition of lactic acid bacteria or rennet, which is a necessary step in the conventional production of cheese. Accordingly, fluctuations in product quality caused by using natural materials such as lactic acid bacteria and rennet, and the costs associated with using these natural materials, can be reduced.
Furthermore, a cheese of the present invention obtained in the manner outlined above can be produced with higher yield than conventional cheeses, and is therefore advantageous from an economic perspective.
The cheese of the present invention can be consumed as fresh cheese, or may be used as a raw material for foodstuffs or within other applications.
The cheese of the present invention preferably contains, per 100 g of solids, not less than 20 mmol, and more preferably not less than 26 mmol of calcium, not less than 2 mmol, and more preferably not less than 5 mmol of magnesium, not more than 5 mmol, and more preferably not more than 3.5 mmol of sodium, and not more than 10.5 mmol, and more preferably not more than 7 mmol of potassium.
Further, the amount of calcium within the cheese is typically not more than 50 mmol per 100 g of solids, and the amount of magnesium is typically not more than 8 mmol per 100 g of solids.

On the other hand, a whey of the present invention obtained in the manner outlined above has lower levels of sodium and potassium than conventional wheys, and consequently a lower ash content, and therefore has a less salty taste. As a result, the whey of the present invention can be used in the same applications as conventional wheys without first being subjected to the type of demineralization treatment that is required for conventional wheys.
For example, infant formula, namely milk powder that is used as a substitute for breast milk, is conventionally produced using whey as a raw material. Because conventional wheys have a higher mineral content than breast milk, generally when a conventional whey is used as a milk powder raw material, the whey is first subjected to a demineralization treatment. However, the whey of the present invention can be used as the raw material for milk powder without requiring a demineralization treatment.
The whey of the present invention preferably contains, per 100 g of solids, not less than 1.5 mmol, and more preferably not less than 2.5 mmol of calcium, not less than 1 mmol, and more preferably not less than 1.5 mmol of magnesium, not more than 10 mmol, and more preferably not more than 5 mmol of sodium, and not more than 20 mmol, and more preferably not more than 10 mmol of potassium.
Further, the amount of calcium within the whey is typically not more than 15 mmol per 100 g of solids, and the amount of magnesium is typically not more than 6 mmol per 100 g of solids.

### EXAMPLES

Specifics of the present invention are described below based on a series of examples.
In the following examples, the units "%" refer to "% by mass."

### [Example 1]

8 kg of a skim milk powder (Morinaga skim milk powder (low heat), composition: protein 36.6%, fat 0.7%, carbohydrates 51.2%, ash 7.9% and moisture 3.6%, mineral content (per 100 g of milk powder): sodium 17.6 mmol, potassium 41.2 mmol, calcium 31.2 mmol, magnesium 4.8 mmol, and citric acid 9.4 mmol) was used as a raw milk, and this raw milk was dissolved in 92 kg of water and cooled to approximately 10°C to prepare a raw milk solution.
This solution (raw milk solution) was passed through 6 L of a strongly basic anion exchange resin (Amberlite IRA402BL), which had been converted to chloride form in advance by passing a saline solution through the resin and then washing with water, at a rate of SV 6, thereby yielding an ion-exchanged solution.
This solution was then subjected to nanofiltration in the manner described below.
Namely, with the temperature maintained at 10°C or lower, the solution was supplied to a nanofiltration membrane (DL3840C-30D, manufactured by GE Water Technologies Inc.), and the solution was concentrated 2-fold using a circulatory system in which the permeate was discharged from the system and the concentrate was returned to the raw solution tank. Next, using the same nanofiltration membrane, a diafiltration operation was performed using a volume of deionized water that was 2.5 times the volume of the concentrate. Subsequently, using the same nanofiltration membrane, the solid concentration within the raw solution tank was increased to 25%, yielding 23 kg of a demineralized and concentrated skim milk (demineralized milk).
Of the thus prepared demineralized milk, 16 kg was spray dried using a dryer manufactured by GEA Niro, under conditions including a hot air blow temperature of 160°C and an air discharge temperature of 82°C, thus yielding 3.5 kg of a demineralized skim milk powder.
When component analyses were performed for this demineralized skim milk powder, then as illustrated by the summary in Table 1, the compositional ratio within the demineralized skim milk powder was determined to be protein 37.4%, fat 0.8%, carbohydrates 54.0%, ash 4.1 %, and moisture 3.7%. Further the mineral content per 100 g of milk powder was sodium 1.4 mmol, potassium 2.6 mmol, calcium 29.7 mmol, magnesium 4.2 mmol, and citric acid 0.9 mmol.
The component analyses were performed as follows.
Protein: micro-Kjeldahl method
Fat: Roese Gottlieb method
Carbohydrates: subtraction method
Ash: heating at 550°C, followed by measurement of the residual mass
Moisture: mass reduction upon drying
Sodium, potassium, calcium, magnesium: ICP method
Citric acid: HPLC method

### [Comparative example 1]

A raw milk solution was prepared by dissolving 8 kg of the same skim milk powder as that used in example 1 in 92 kg of water, and with the exception of supplying the raw milk solution directly to the nanofiltration process, without first passing the solution through an anion exchange resin in chloride form, operations were performed in the same manner as example 1, yielding 24 kg of a demineralized and concentrated skim milk (demineralized milk) in which the solid concentration had been increased to 25%.
Of the thus prepared demineralized milk, 15 kg was spray-dried in the same manner as example 1, yielding 3.4 kg of a demineralized skim milk powder. When component analyses were performed for this demineralized skim milk powder in the same manner as described for example 1, then as illustrated by the summary in Table 1, the compositional ratio within the demineralized skim milk powder was determined to be protein 36.9%, fat 0.8%, carbohydrates 52.3%, ash 6.0%, and moisture 4.0%. Further the mineral content per 100 g of milk powder was sodium 7.2 mmol, potassium 14.2 mmol, calcium 30.2 mmol, magnesium 4.4 mmol, and citric acid 8.0 mmol.

**[Table 1]**

| | Composition of skim milk powder used in raw milk solution | Example 1 | Comparative example 1 |
|---|---|---|---|
| Moisture (%) | 3.6 | 3.7 | 4.0 |
| Sodium (mmol/100g) | 17.6 | 1.4 | 7.2 |
| Potassium (mmol/100 g) | 41.2 | 2.6 | 14.2 |
| Calcium (mmol/100 g) | 31.2 | 29.7 | 30.2 |
| Magnesium (mmol/100 g) | 4.8 | 4.2 | 4.4 |
| Sodium + potassium (mmol/100 g) | 58.8 | 4.0 | 21.4 |
| Calcium + magnesium (mmol/100 g) | 36.0 | 33.9 | 34.6 |
| Citric acid (mmol/100 g) | 9.4 | 0.9 | 8.0 |

As shown in Table 1, despite the fact that the same nanofiltration process was performed in both examples, the demineralized milk of example 1, in which the raw milk solution was first passed through an anion exchange resin in chloride form to increase the chloride ion concentration within the milk solution, had substantially the same divalent mineral content as the demineralized milk of comparative example 1, but exhibited a dramatically reduced monovalent mineral content.

### [Test example 1]

The demineralized milk produced in example 1 and the demineralized milk produced in comparative example 1 were evaluated for flavor. Specifically, each of the demineralized milks was prepared as a 10% aqueous solution, and then evaluated by 21 trained panelists for flavor, degree of saltiness, and milky sensation strength.
As illustrated in Table 2, the results revealed that, compared with comparative example 1, the demineralized milk of example 1 had a statistically significant more preferable flavor, lower degree of saltiness, and stronger milky sensation.

**[Table 2]**

| | Preferred example 1 or thought example 1 was stronger | No particular preference | Preferred comparative example 1 or thought comparative example 1 was stronger | p value* |
|---|---|---|---|---|
| Flavor | 14 people | 5 people | 2 people | < 0.01 |
| Degree of saltiness | 0 people | 4 people | 17 people | < 0.01 |
| Milky sensation strength | 14 people | 4 people | 3 people | < 0.05 |

| | | | | |
|---|---|---|---|---|
| *Wilcoxon signed rank sum test | | | | |

### [Example 2]

8 kg of the same skim milk powder as that used in example 1 was dissolved in 92 kg of water and cooled to approximately 10°C to prepare an identical raw milk solution to that used in example 1.
Subsequently, with the temperature maintained at 10°C or lower, this raw milk solution was passed through 6 L of a strongly basic anion exchange resin (Amberlite IRA402BL), which had been converted to chloride form in advance by passing a saline solution through the resin and then washing with water, at a rate of SV 6, thereby yielding an ion-exchanged solution.
This solution was then subjected to nanofiltration in the manner described below.
Namely, with the temperature maintained at 10°C or lower, the solution was supplied to a nanofiltration membrane (DL4040C, manufactured by Osmonics, Inc.), and the solution was concentrated 3-fold using a circulatory system in which the permeate was discharged from the system and the concentrate was returned to the raw solution tank. Next, using the same nanofiltration membrane, a diafiltration operation was performed using a volume of deionized water that was 2 times the volume of the concentrate, thus yielding 22.6 kg of a demineralized and concentrated skim milk (demineralized milk).
The demineralized milk was powdered by freeze drying, yielding 5.1 kg of a demineralized skim milk powder. When component analyses were performed for this demineralized skim milk powder in the same manner as described for example 1, then as illustrated by the summary in Table 3, the compositional ratio within the demineralized skim milk powder was determined to be protein 37.6%, fat 0.8%, carbohydrates 54.3%, ash 3.7%, and moisture 3.6%. Further the mineral content per 100 g of milk powder was sodium 1.6 mmol, potassium 3.7 mmol, calcium 30.2 mmol, magnesium 4.7 mmol, and citric acid 0.8 mmol.

### [Comparative example 2]

A raw milk solution was prepared by dissolving 8 kg of the skim milk powder in 92 kg of water, and with the exception of supplying the raw milk solution directly to the nanofiltration process, without first passing the solution through an anion exchange resin in chloride form, operations were performed in the same manner as example 2, yielding 26.5 kg of a demineralized skim milk (demineralized milk).
This demineralized milk was freeze dried in the same manner as example 2, yielding 5.9 kg of a demineralized skim milk powder. When component analyses were performed for this demineralized skim milk powder in the same manner as described for example 1, then as illustrated by the summary in Table 3, the compositional ratio within the demineralized skim milk powder was determined to be protein 37.5%, fat 0.7%, carbohydrates 52.0%, ash 5.9%, and moisture 3.9%. Further the mineral content per 100 g of milk powder was sodium 6.9 mmol, potassium 16.7 mmol, calcium 28.9 mmol, magnesium 4.5 mmol, and citric acid 8.9 mmol.

**[Table 3]**

| | Composition of skim milk powder used in raw milk solution | Example 2 | Comparative example 2 |
|---|---|---|---|
| Moisture (%) | 3.6 | 3.6 | 3.9 |
| Sodium (mmol/100 g) | 17.6 | 1.6 | 6.9 |
| Potassium (mmol/100 g) | 41.2 | 3.7 | 16.7 |
| Calcium (mmol/100 g) | 31.2 | 30.2 | 28.9 |
| Magnesium (mmol/100 g) | 4.8 | 4.7 | 4.5 |
| Sodium + potassium (mmol/100 g) | 58.8 | 5.3 | 23.6 |
| Calcium + magnesium (mmol/100 g) | 36.0 | 34.9 | 33.4 |
| Citric acid (mmol/100 g) | 9.4 | 0.8 | 8.9 |

As shown in Table 3, despite the fact that the same nanofiltration process was performed in both examples, the demineralized milk of example 2, in which the raw milk solution was first passed through an anion exchange resin in chloride form to increase the chloride ion concentration within the milk solution, had substantially the same divalent mineral content as the demineralized milk of comparative example 2, but exhibited a dramatically reduced monovalent mineral content.

### [Test example 2]

The demineralized milk produced in example 2 and the demineralized milk produced in comparative example 2 were evaluated for flavor in the same manner as that described for test example 1.
As illustrated in Table 4, the results revealed that, compared with comparative example 2, the demineralized milk of example 2 had a statistically significant more preferable flavor, lower degree of saltiness, and stronger milky sensation.

**[Table 4]**

| | Preferred example 2 or thought example 2 was stronger | No particular preference | Preferred comparative example 2 or thought comparative example 2 was stronger | p value* |
|---|---|---|---|---|
| Flavor | 13 people | 5 people | 3 people | < 0.05 |
| Degree of saltiness | 0 people | 5 people | 16 people | < 0.01 |
| Milky sensation strength | 14 people | 4 people | 3 people | < 0.05 |

| | | | | |
|---|---|---|---|---|
| * Wilcoxon signed rank sum test | | | | |

### [Example 3]

8 kg of the same skim milk powder as that used in example 1 was dissolved in 92 kg of water and cooled to approximately 10°C to prepare an identical raw milk solution to that used in example 1.
Next, with the temperature maintained at 10°C or lower, the raw milk solution was supplied to a nanofiltration membrane (DL3840C-30D, manufactured by GE Water Technologies Inc.), and the solution was concentrated 2-fold using a circulatory system in which the permeate was discharged from the system and the concentrate was returned to the raw solution tank. The resulting solution was then diluted with deionized water to achieve a solid concentration of 7%.
Subsequently, the solution was passed through 4 L of a strongly basic anion exchange resin (Amberlite IRA402BL), which had been converted to chloride form in advance by passing a saline solution through the resin and then washing with water, at a rate of SV 8, thereby yielding an ion-exchanged solution.
With the temperature maintained at 10°C or lower, the solution was then supplied to an identical nanofiltration membrane to that used above, and concentrated 2-fold. Next, using the same nanofiltration membrane, a diafiltration operation was performed using a volume of deionized water that was 1.5 times the volume of the concentrate, thus yielding 46.2 kg of a demineralized skim milk (demineralized milk).
The demineralized milk was powdered by freeze drying, yielding 6.0 kg of a demineralized skim milk powder. When component analyses were performed for this demineralized skim milk powder in the same manner as described for example 1, then as illustrated by the summary in Table 5, the compositional ratio within the demineralized skim milk powder was determined to be protein 36.9%, fat 0.8%, carbohydrates 54.4%, ash 4.3%, and moisture 3.6%. Further the mineral content per 100 g of milk powder was sodium 2.9 mmol, potassium 6.7 mmol, calcium 28.1 mmol, magnesium 4.3 mmol, and citric acid 1.3 mmol.

**[Table 5]**

| | Composition of skim milk powder used in raw milk solution | Example 3 |
|---|---|---|
| Moisture (%) | 3.6 | 3.6 |
| Sodium (mmol/100 g) | 17.6 | 2.9 |
| Potassium (mmol/100 g) | 41.2 | 6.7 |
| Calcium (mmol/100 g) | 31.2 | 28.1 |
| Magnesium (mmol/100 g) | 4.8 | 4.3 |
| Sodium + potassium (mmol/100 g) | 58.8 | 9.6 |
| Calcium + magnesium (mmol/100 g) | 36.0 | 32.4 |
| Citric acid (mmol/100 g) | 9.4 | 1.3 |

### [Test example 3]

The demineralized milk produced in example 3 and a commercially available skim milk powder (manufactured by Morinaga Milk Industry Co., Ltd.) were evaluated for flavor in the same manner as that described for test example 1.
As illustrated in Table 6, the results revealed that, compared with comparative example 2, the demineralized milk of example 2 had a statistically significant more preferable flavor, lower degree of saltiness, and stronger milky sensation.

**[Table 6]**

| | Preferred example 3 or thought example 3 was stronger | No particular preference | Preferred the conventional skim milk or thought the conventional skim milk was stronger | p value* |
|---|---|---|---|---|
| Flavor | 14 people | 5 people | 2 people | < 0.01 |
| Degree of saltiness | 0 people | 3 people | 18 people | < 0.01 |
| Milky sensation strength | 14 people | 3 people | 4 people | < 0.05 |

| | | | | |
|---|---|---|---|---|
| * Wilcoxon signed rank sum test | | | | |

### [Example 4]

1 kg of the demineralized skim milk powder produced in example 1 was dissolved in 10 kg of water, and 0.9 kg of a separated cream with a fat content of 48% that had been prepared separately was mixed into the solution to produce a milk beverage. Following mixing, the compositional ratio was protein 3.4%, fat 3.6%, carbohydrates 5.2%, ash 0.4%, and water: 87.4%. Further the mineral content per 100 g of the milk beverage was sodium 0.2 mmol, potassium 0.4 mmol, calcium 2.7 mmol, and magnesium 0.4 mmol.
Compared with a typical cow's milk, this milk beverage exhibited less saltiness, a stronger degree of sweetness, and an improved milky sensation.

### [Example 5]

When 4 kg of the demineralized skim milk produced in example 1 was heated at 80°C for one minute, a curd was produced. This curd was gathered together and then collected on a 200-mesh resin filter, yielding 1.9 kg of a cheese.
This cheese displayed minimal saltiness, exhibited excellent elasticity and a superior milky sensation, and had an excellent taste with a flavor similar to that of mozzarella cheese.
A portion of this cheese was freeze dried and ground using conventional methods, and when component analyses were performed for this ground product, the compositional ratio within the cheese was determined to be protein 56.9%, fat 0.7%, carbohydrates 35.0%, ash 6.0%, and moisture 1.4%. Further the mineral content per 100 g of the ground product was sodium 1.1 mmol, potassium 1.9 mmol, calcium 48.2 mmol, and magnesium 5.8 mmol.
On the other hand, the residual liquid following solid-liquid separation of the cheese from the heated demineralized skim milk weighed 2.1 kg, was slightly cloudy, and had a so-called whey-like flavor, although the level of saltiness was low, and the level of sweetness was improved. The solid concentration of the liquid was 9.9%.
A portion of this liquid was freeze dried and ground using conventional methods, and when component analyses were performed for this ground product, then as illustrated by the summary in Table 7, the compositional ratio of the solid fraction within the liquid was determined to be protein 5.3%, fat 0.8%, carbohydrates 92.8%, and ash 1.1%. Further the mineral content per 100 g of the ground product was sodium 2.9 mmol, potassium 4.1 mmol, calcium 3.4 mmol, and magnesium 2.0 mmol.

**[Table 7]**

| | Whey of example 5 | Commercially available cheese whey | Breast milk |
|---|---|---|---|
| Sodium (mmol/100 g of solids) | 2.9 | 24.1 | 5.4 |
| Potassium (mmol/100 g of solids) | 4.1 | 65.6 | 10.2 |
| Calcium (mmol/100 g of solids) | 3.4 | 11.7 | 5.6 |
| Magnesium (mmol/100 g of solids) | 2.0 | 4.6 | 1.0 |
| Ash (%) | 1.1 | 7.6 | 1.7 |

As shown in Table 7, compared with a conventional cheese whey, the whey obtained in example 5 had a much lower monovalent mineral content, and therefore also had a lower ash content, making it extremely useful as a raw material for milk powder.
In Table 7, the values obtained by compositional analysis of breast milk are shown for reference. All of the values recorded in Table 7 represent values per solid fraction.
Furthermore, using a powder of the whey obtained in example 5 (whey powder) and a commercially available cheese whey powder (manufactured by Fonterra Cooperative Group), 10% aqueous solutions were prepared and then evaluated by 21 trained panelists for flavor and degree of saltiness.

**[Table 8]**

| | Preferred the whey of example 5 or thought the whey of example 5 was stronger | No particular preference | Preferred the commercially available cheese whey or thought the commercially available cheese whey was stronger | p value* |
|---|---|---|---|---|
| Flavor | 18 people | 2 people | 1 people | < 0.01 |
| Degree of saltiness | 0 people | 1 people | 20 people | < 0.01 |

| | | | | |
|---|---|---|---|---|
| * Wilcoxon signed rank sum test | | | | |

As shown in Table 8, the results revealed that compared with the commercially available cheese whey powder, the whey of example 5 had a more favorable flavor and a lower degree of saltiness.

### [Example 6]

4 kg of a skim milk powder (Morinaga skim milk powder (low heat), composition: protein 36.6%, fat 0.7%, carbohydrates 51.2%, ash 7.9% and moisture 3.6%, mineral content (per 100 g of milk powder): sodium 17.6 mmol, potassium 41.2 mmol, calcium 31.2 mmol, magnesium 4.8 mmol, and citric acid 9.4 mmol) was dissolved in 29 kg of water, and the solution was cooled to approximately 10°C.
This solution was passed through 1.8 L of a strongly anionic ion exchange resin (Amberlite IRA402BL) (ratio of amount of solids in the raw milk solution divided by amount of the ion exchange resin: 2.2) in a chloride form at a rate of SV 6, thereby yielding an ion-exchanged solution. With the temperature maintained at 10°C or lower, this solution was then supplied to a nanofiltration membrane (DL3840-30D, manufactured by GE Water Technologies Inc.), and the solution was concentrated 1.5-fold using a circulatory system in which the permeate was discharged from the system and the concentrate was returned to the raw solution tank. A diafiltration (dialysis-filtration) operation was then performed using a volume of deionized water that was 2.5 times the volume of the concentrate, yielding 22 kg of a demineralized and concentrated skim milk. This demineralized skim milk was powdered by freeze drying, yielding 2.9 kg of a demineralized skim milk powder (compositional ratio: protein 37.2%, fat 0.9%, carbohydrates 54.5%, ash 4.2% and moisture 3.2%, mineral content (per 100 g of milk powder): sodium 4.2 mmol, potassium 9.3 mmol, calcium 30.2 mmol, magnesium 4.5 mmol, and citric acid 2.5 mmol).

### [Example 7]

400g of the demineralized skim milk powder produced in example 1 was mixed with 100 g of a commercially available skim milk powder (manufactured by Morinaga Milk Industry Co., Ltd.), yielding a mixed powder of 500 g. Analysis of this mixed milk powder revealed a compositional ratio of protein 37.2%, fat 0.8%, carbohydrates 53.4%, ash 4.9% and moisture 3.7%. Further, the mineral content per 100 g of milk powder was sodium 4.3 mmol, potassium 10.0 mmol, calcium 30.0 mmol, magnesium 4.3 mmol, and citric acid 2.9 mmol.

### [Example 8]

50 g of the demineralized skim milk powder produced in example 1 was dissolved in 200 g of water. Meanwhile, 5.9 g of trisodium citrate dihydrate crystals were dissolved in 20 g of water to prepare a 20% by weight solution. 0.25 g of the trisodium citrate solution was added to the 250 g of demineralized skim milk. Analysis of the resulting solution revealed a compositional ratio within the solution of protein 7.8%, fat 0.2%, carbohydrates 11.2%, ash 0.9% and water 79.9%. Further, the mineral content per 100 g of solution was sodium 0.5 mmol, potassium 0.5 mmol, calcium 6.2 mmol, magnesium 0.9 mmol, and citric acid 0.3 mmol.

### [Test example 4]

10 g samples of the demineralized skim milk powders prepared in example 2, example 3, example 6 and example 7 were each dissolved in 40 g of deionized water, thus preparing a series of solutions each having a solid concentration of approximately 20%. The solution of example 8 was used without further modification. A 10 ml sample of each solution was placed in a test tube, and when the test tubes were subsequently immersed in a simmering water bath to heat the liquid temperature to 90°C, a curd formed inside each of the test tubes. Each of the curds was collected on a 200-mesh resin filter, yielding a series of cheeses.

### [Example 9]

6 kg of a skim milk powder (Morinaga skim milk powder (super high heat), composition: protein 35.5%, fat 0.8%, carbohydrates 51.9%, ash 7.9% and moisture 3.9%, mineral content (per 100 g of milk powder): sodium 18.2 mmol, potassium 44.2 mmol, calcium 31.4 mmol, magnesium 4.7 mmol, and citric acid 10.4 mmol) was dissolved in 44 kg of water, and the solution was cooled to approximately 10°C.
This solution was passed through 7.8 L of a strongly anionic ion exchange resin (Amberlite IRA402BL) in a chloride form at a rate of SV 6, thereby yielding an ion-exchanged solution. With the temperature maintained at 10°C or lower, this solution was subjected to a diafiltration (dialysis-filtration) treatment, using a nanofiltration membrane (DL3840-30D, manufactured by GE Water Technologies Inc.) and a volume of deionized water that was 2.5 times the volume of the concentrate. Subsequently, the solution was concentrated 1.6-fold using a circulatory system in which the permeate was discharged from the system and the concentrate was returned to the raw solution tank, thus yielding 20.0 kg of a demineralized and concentrated skim milk. 5 kg of this demineralized skim milk was powdered by freeze drying, yielding 0.9 kg of a demineralized skim milk powder (compositional ratio: protein 37.4%, fat 0.9%, carbohydrates 54.9%, ash 4.5% and moisture 2.3%, mineral content (per 100 g of milk powder): sodium 2.8 mmol, potassium 7.1 mmol, calcium 28.2 mmol, magnesium 3.6 mmol, and citric acid 0.7 mmol).

### INDUSTRIAL APPLICABILITY

The present invention enables the provision of a demineralized milk in which the amount of monovalent minerals has been reduced significantly while any reduction in the amount of divalent minerals is suppressed, and the invention is therefore very useful in the field of food products.

## Claims

1. A process for producing a demineralized milk, the process comprising:
passing a raw milk through an anion exchange resin in chloride form to effect anion exchange, and
removing monovalent minerals contained within said raw milk following said anion exchange using a membrane separation process.

2. The process according to claim 1, wherein said membrane separation process is a nanofiltration process.

3. The process according to claim 1 or 2, wherein said raw milk is a milk in which at least a portion of fat has been removed from a whole milk.

4. The process according to claim 3, further comprising mixing fat into said demineralized milk.

5. A demineralized milk produced using the process according to any one of claims 1 to 4, wherein
said demineralized milk comprises, per 100 g of solids, not less than 26 mmol of calcium, not less than 2 mmol of magnesium, not more than 4.5 mmol of sodium, not more than 10.5 mmol of potassium, and not more than 3 mmol of citric acid.

6. A process for producing a cheese and whey, the process comprising:
passing a raw milk through an anion exchange resin in chloride form to effect anion exchange,
removing monovalent minerals contained within said raw milk following said anion exchange using a membrane separation process, thus preparing a demineralized milk,
heating said demineralized milk to produce a curd in said demineralized milk, and
performing a solid-liquid separation treatment to separate said curd from a liquid other than said curd.

7. The process according to claim 6, wherein said membrane separation process is a nanofiltration process.

8. A cheese produced by the process according to claim 6 or 7, wherein
said cheese comprises, per 100 g of solids, not less than 20 mmol of calcium, not less than 2 mmol of magnesium, not more than 5 mmol of sodium, and not more than 10.5 mmol of potassium.

9. A whey produced by the process according to claim 6 or 7, wherein
said whey comprises, per 100 g of solids, not less than 1.5 mmol of calcium, not less than 1 mmol of magnesium, not more than 10 mmol of sodium, and not more than 20 mmol of potassium.

## Patentansprüche

1. Ein Verfahren zur Herstellung einer entmineralisierten Milch, wobei das Verfahren umfasst:
Leiten einer Rohmilch durch ein Anionenaustauscherharz in Chlorid-Form, um einen Anionenaustausch zu bewirken, und
Entfernen einwertiger Mineralien, die in der Rohmilch enthalten sind, nach dem Anionenaustausch unter Verwendung eines Membrantrennverfahrens.

2. Das Verfahren gemäß Anspruch 1, wobei das Membrantrennverfahren ein Nanofiltrationsverfahren ist.

3. Das Verfahren gemäß Anspruch 1 oder 2, wobei die Rohmilch eine Milch ist, in der mindestens ein Teil eines Fettes aus einer Vollmilch entfernt wurde.

4. Das Verfahren gemäß Anspruch 3, welches ferner das Einmischen von Fett in die entmineralisierte Milch umfasst.

5. Eine entmineralisierte Milch, hergestellt unter Verwendung des Verfahrens gemäß einem der Ansprüche 1 bis 4, wobei
die entmineralisierte Milch pro 100 g Feststoff nicht weniger als 26 mmol Calcium, nicht weniger als 2 mmol Magnesium, nicht mehr als 4,5 mmol Natrium, nicht mehr als 10,5 mmol Kalium und nicht mehr als 3 mmol Zitronensäure umfasst.

6. Ein Verfahren zur Herstellung eines Käses und einer Molke, wobei das Verfahren umfasst:
Leiten einer Rohmilch durch ein Anionenaustauscherharz in Chlorid-Form um einen Anionenaustausch zu bewirken,
Entfernen einwertiger Mineralien, die in der Rohmilch enthalten sind, nach dem Anionenaustausch unter Verwendung eines Membrantrennverfahrens, wodurch eine entmineralisierte Milch hergestellt wird,
Erwärmen der entmineralisierten Milch, um einen Käsebruch in der entmineralisierten Milch herzustellen, und
Durchführen einer Fest-Flüssig-Trennbehandlung zur Abtrennung des Käsebruchs von einer Flüssigkeit, die nicht Käsebruch ist.

7. Das Verfahren gemäß Anspruch 6, wobei das Membrantrennverfahren ein Nanofiltrationsverfahren ist.

8. Ein Käse, hergestellt nach dem Verfahren gemäß Anspruch 6 oder 7, wobei der Käse pro 100 g Feststoff nicht weniger als 20 mmol Calcium, nicht weniger als 2 mmol Magnesium, nicht mehr als 5 mmol Natrium und nicht mehr als 10,5 mmol Kalium umfasst.

9. Eine Molke, hergestellt nach dem Verfahren gemäß Anspruch 6 oder 7, wobei die Molke pro 100 g Feststoff nicht weniger als 1,5 mmol Calcium, nicht weniger als 1 mmol Magnesium, nicht mehr als 10 mmol Natrium und nicht mehr als 20 mmol Kalium umfasst.

## Revendications

1. Procédé de production d'un lait déminéralisé, le procédé comprenant :
le passage d'un lait cru à travers une résine échangeuse d'anions sous forme de chlorure pour réaliser l'échange d'anions, et
l'élimination des minéraux monovalents contenus dans ledit lait cru après ledit échange d'anions à l'aide d'un procédé de séparation sur membrane.

2. Procédé selon la revendication 1, dans lequel ledit procédé de séparation sur membrane est un procédé de nanofiltration.

3. Procédé selon la revendication 1 ou 2, dans lequel ledit lait cru est un lait dans lequel au moins une partie de la graisse a été extraite d'un lait entier.

4. Procédé selon la revendication 3, comprenant en outre un mélange de graisse dans ledit lait déminéralisé.

5. Lait déminéralisé produit en utilisant le procédé selon l'une quelconque des revendications 1 à 4, dans lequel
ledit lait déminéralisé comprend, pour 100 g de matières solides, pas moins de 26 mmol de calcium, pas moins de 2 mmol de magnésium, pas plus de 4,5 mmol de sodium, pas plus de 10,5 mmol de potassium, et pas plus de 3 mmol d'acide citrique.

6. Procédé de production d'un fromage et de lactosérum, le procédé comprenant :
le passage d'un lait cru à travers une résine échangeuse d'anions sous forme de chlorure pour réaliser l'échange d'anions,
l'élimination des minéraux monovalents contenus dans ledit lait cru après ledit échange d'anions à l'aide d'un procédé de séparation sur membrane, pour ainsi préparer un lait déminéralisé,
le chauffage dudit lait déminéralisé pour produire un caillé dans ledit lait déminéralisé, et
la réalisation d'un traitement de séparation solide-liquide pour séparer ledit caillé d'un liquide autre que ledit caillé.

7. Procédé selon la revendication 6, dans lequel ledit procédé de séparation sur membrane est un procédé de nanofiltration.

8. Fromage produit par le procédé selon la revendication 6 ou 7, dans lequel ledit fromage comprend, pour 100 g de matières solides, pas moins de 20 mmol de calcium, pas moins de 2 mmol de magnésium, pas plus de 5 mmol de sodium, et pas plus de 10,5 mmol de potassium.

9. Lactosérum produit par le procédé selon la revendication 6 ou 7, dans lequel
ledit lactosérum comprend, pour 100 g de matières solides, pas moins de 1,5 mmol de calcium, pas moins de 1 mmol de magnésium, pas plus de 10 mmol de sodium, et pas plus de 20 mmol de potassium.
